# EUROPÄISCHE PATENTSCHRIFT

(11) **EP 1 963 172 B1**
(45) Veröffentlichungstag und Bekanntmachung des Hinweises auf die Patenterteilung: **30.04.2014**
(21) Anmeldenummer: 06846958.4
(22) Anmeldetag: 21.12.2006
(51) Int. Cl.: B63B 25/00, B63B 27/10

(54) **SCHWIMMENDE VORRICHTUNG ZUM TRANSPORT UND UMSCHLAG VON CONTAINERN**
FLOATING DEVICE FOR TRANSPORTING AND TRANSFERRING CONTAINERS
INSTALLATION FLOTTANTE DE TRANSPORT ET DE TRANSBORDEMENT DE CONTENEURS

(30) Priorität: 24.12.2005 DE 102005062214
(43) Veröffentlichungstag der Anmeldung: 03.09.2008
(73) Patentinhaber: Malchow, Ulrich, 22587 Hamburg (DE)
(72) Erfinder: Malchow, Ulrich, 22587 Hamburg (DE)
(74) Vertreter: Klickow, Hans-Henning
(86) Internationale Anmeldenummer: PCT/DE2006/002328
(87) Internationale Veröffentlichungsnummer: WO 2007/076838

(56) Entgegenhaltungen:
- DD-A- 63 288
- DE-A1- 3 402 520
- DE-A1- 10 221 460
- DE-U- 7 530 368
- GB-A- 1 543 002
- NL-A- 7 414 359

## Beschreibung

Die Erfindung betrifft eine schwimmende selbst fahrende Vorrichtung zum Transport und Umschlag von Containern wie beanspruchs in Anspruch 1.

Derartige Vorrichtungen sind in einer Ausführungsform als selbst fahrende Schwimmkrane bekannt, die als Schwergutkrane ausgeführt sind. Derartige Schwimmkrane haben lediglich eine Umschlagsfunktion und sind selbst nur unzureichend für einen Transport von Containern geeignet, da nur minimale Ablageflächen vorhanden sind. Wenn derartige Schwimmkrane drehbar ausgestaltet sind, haben sie ihren Drehkranz unterhalb des Vertikalelementes, so daß der gesamte Kran gedreht werden muß.

Im Bereich von Hafenanlagen erfolgt die Verladung von Containern entweder mit Hilfe von speziellen und aufwendigen verladebrücken, die entlang des Kais angeordnet sind, oder es werden spezielle Bordkrane auf den Seeschiffen verwendet, um eine Beladung oder Entladung dieser Schiffe durchzuführen. Für einen wassergebundenen Containertransport zwischen den verschiedenen Anlagen innerhalb eines Hafens sind die bekannten Vorrichtungen jedoch nicht optimal geeignet, da hierzu ein Transport mit einer ladegeschirrlosen Schute oder einem Ponton sowie der zweimalige Umschlag mit den aufwendigen Verladebrücken erforderlich ist. Statt dessen erfolgt der Horizontaltransport innerhalb eines Hafens daher meist mit einem Straßenfahrzeug.

Aus der DE-OS 102 21 460 die alle Merkmale des Oberbegriffs des Anspruchs 1 offenbars, ist bereits ein selbst fahrendes Ponton mit Verladekran zum Transport von Containern in Hafenanlagen bekannt. Auch diese Vorrichtung kann aber noch nicht alle Anforderungen an eine hohe Nutzungsflexibilität erfüllen, da insbesondere die Handhabbarkeit in räumlich engen Zugangsbereichen noch nicht optimiert ist.

Aus der GB 1543002 A ist bereits ein Schiff mit einem Containerladeraum bekannt. Im Bereich eines Schiffsdecks sind Luken angeordnet, durch die hindurch eine Beladung und eine Entladung des Schiffsinnenraumes unter Verwendung von Kränen möglich ist. Gemäß einem Ausführungsbeispiel werden zwei seitlich angeordnete Kräne verwendet, die in der Nähe eines Schiffsbugs bzw. eines Schiffshecks positioniert sind.

Aufgabe der vorliegenden Erfindung ist es, eine Vorrichtung der einleitend genannten Art derart zu konstruieren, daß ein wirtschaftlicher und flexibler Containertransport und -umschlag zwischen den verschiedenen Anlagen eines Hafens unterstützt wird, der auch den unterschiedlichen Umschlagsbedingungen der jeweiligen Anlagen Rechnung trägt.

Diese Aufgabe wird erfindungsgemäß dadurch gelöst, daß der Kran einen Drehkranz aufweist und daß sowohl der Kran als auch das Deckshaus in Richtung der Längsachse etwa in der Mitte eines vorgegebenen Arbeitsbereiches angeordnet sind, wobei der Kran seitlich neben dem Deckshaus positioniert ist und daß der Kranausleger über das Deckshaus verschwenkbar ist, sowie daß das Ponton im wesentlichen spiegelsymmetrisch zur Querachse ausgebildet ist.

Eine optimale Positionierung des Krans auf dem Ponton erfolgt erfindungsgemäß dadurch, daß der Kran und das Deckshaus mit Ruderhaus in Richtung der Längsachse etwa in der Mitte eines vorgesehenen Arbeitsbereiches angeordnet ist.

Durch die relativ zur Längsachse seitlich versetzte Anordnung des Kranes ist es möglich, im Bereich einer Seite des Pontons einen großen seitlichen Arbeitsbereich für den Kran bereitzustellen und hierdurch auch mit größerer Entfernung zur Kaimauer positionierte Container aufzunehmen oder Container dort abzustellen. Liegt die Vorrichtung dagegen derart an einer Kaianlage, daß der Kran sich auf der der Kaimauer abgewandten Seite der Vorrichtung befindet, kann der Kran schneller arbeiten, da der für die Umschlagsarbeiten erforderliche Drehwinkel kleiner ist.

Die Anordnung des Deckshauses mit Ruderhaus seitlich neben dem Kran führt zu einer kompakten Konstruktion und zu einer Optimierung der verfügbaren Ladefläche. Durch die in Längsrichtung in etwa mittige Anordnung des Ruderhauses ergeben sich vergleichsweise geringe Entfernungen zu den beiden Schiffsenden, so daß eine gute Übersichtlichkeit bei einem Manövrieren des Pontons erreicht wird.

Durch die Ausbildung des schwimmfähigen Objektes als Ponton ist es möglich, eine für den Gütertransport und -umschlag innerhalb von Hafenanlagen optimale Gestaltung des schwimmfähigen Objektes mit der Funktionalität des Verladekranes zu kombinieren. Durch die Anordnung des Drehkranzes oberhalb des Vertikalelementes und mit einem Abstand zum Deck des Pontons ist es möglich, einen platzsparenden, einfachen und robusten Aufbau mit einer hohen Funktionalität und Zuverlässigkeit auch bei rauhen einwirkenden Betriebsbedingungen zu gewährleisten. Ein unterhalb der Kransäule befindlicher Drehkranz hätte einen ungleich größeren Durchmesser und würde entsprechend viele Containerstellplätze wegnehmen.

Zur Gewährleistung einer hohen Mobilität des Transport- und Umschlaggerätes ist der Ponton mit mindestens einem Antriebsaggregat versehen.

Eine Steuerung des Pontons wird dadurch unterstützt, daß der Ponton im Ruderhaus einen Steuerstand aufweist, der in lotrechter Richtung auf einer Höhe oberhalb einer maximalen Beladungsebene angeordnet ist.

Zur Unterstützung von längeren Arbeitsphasen wird vorgeschlagen, daß der Ponton mit mindestens einer Besatzungsunterkunft versehen ist.

Eine vielseitige Manövrierfähigkeit des Pontons wird dadurch unterstützt, daß das/die Antriebsaggregat/e mit zwei Ruderpropellern gekoppelt ist/sind.

Eine Manövrierfähigkeit des Pontons auf der Stelle kann dadurch optimal unterstützt werden, daß an jedem Ende des Pontons jeweils ein Ruderpropeller angeordnet ist.

Insbesondere wird eine hohe Kursstabilität dadurch erreicht, daß die Ruderpropeller bei Anordnung jeweils an den Enden relativ zur Längsachse asymmetrisch angeordnet sind in der Form daß die Ruderpropeller im Wesentlichen in entgegen gesetzter Richtung jeweils gleiche Abstände zur Längsachse aufweisen.

Eine hohe Strukturfestigkeit auch bei großen zu transportierenden Lasten kann dadurch erreicht werden, daß die Struktur des Pontons mindestens im Bereich einer Befestigung des Krans an der Struktur eine Strukturverstärkung aufweist.

Eine typische Gestaltung besteht darin, daß der Ponton eine im Wesentlichen quaderförmige Gestaltung aufweist.

Zu einer universellen und langfristigen Betriebsfähigkeit trägt es bei, daß der Kran eine Dauerbelastungen widerstehende Konstruktion aufweist.

In den Zeichnungen sind Ausführungsbeispiele der Erfindung schematisch dargestellt. Es zeigen:
- Fig. 1: Eine Seitenansicht eines Schwimmpontons mit eigenem Antrieb und Containerkran,
- Fig. 2: eine Frontansicht der vorrichtung gemäß Fig. 1 in einem Betriebszustand, bei der ein Ausleger des Containerkrans seitlich zur Verladung von Containern über das Deckshaus verschwenkt ist,
- Fig. 3: eine Draufsicht auf das Hauptdeck und
- Fig. 4: eine Ausführungsform mit zweiteiligem Deckshaus.

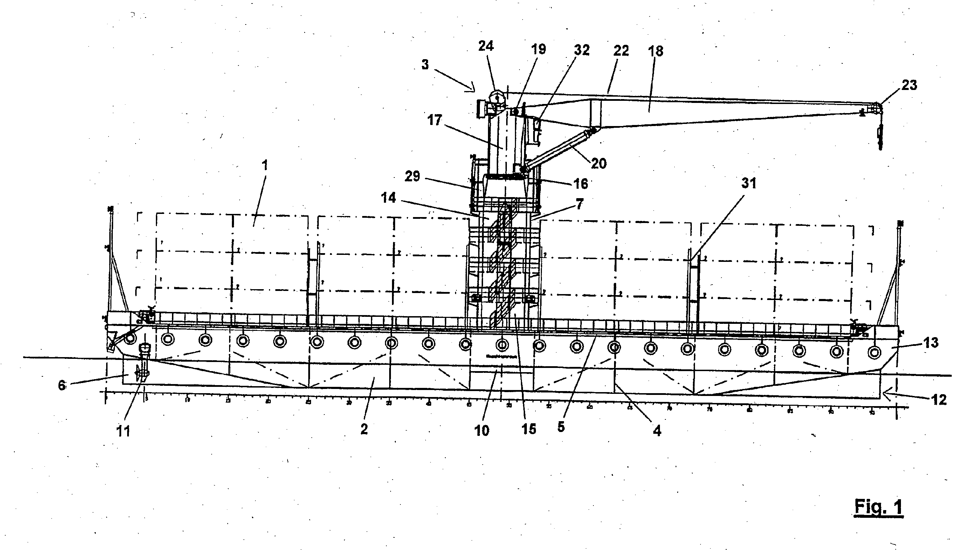

Fig. 1 zeigt ein Ausführungsbeispiel der Vorrichtung zum Transport von Containern (1), bei der eine Ausbildung als Ponton (2) vorliegt, auf dem ein Kran (3) angeordnet ist. Der Ponton (2) besteht im Wesentlichen aus einem quaderförmigen Grundelement, das von einer Struktur (4) versteift ist. In lotrechter Richtung oben besitzt der Ponton (2) ein Deck (5), auf dem die Container (1) angeordnet werden. Der Ponton (2) ist mit Besatzungsunterkünften (7) sowie einem oberhalb der Besatzungsunterkünfte (7) angeordnetem Ruderhaus (29) versehen. Ein Antriebsaggregat (10) ist mit Ruderpropellern (11, 12) gekoppelt. Die Ruderpropeller (11, 12) sind jeweils an den Enden (6, 13) des Pontons (2) angeordnet.

Der Kran (3) besteht im Wesentlichen aus einem Vertikalelement (14), das im Bereich eines Elementfußes (15) mit der Struktur (4) des Pontons (2) verbunden ist. Im Bereich seiner dem Elementfuß (15) abgewandten Ausdehnung trägt das Vertikalelement (14) einen Drehkranz (16), der einen Krankopf (17) horizontal verschwenkbar relativ zum Vertikalelement (14) lagert. Der Krankopf (17) haltert einen Ausleger (18), der über ein Schwenkgelenk (19) relativ zum Krankopf (17) verschwenkbar gelagert ist. Eine verschwenkung des Auslegers (18) relativ zum Krankopf (17) kann unter Verwendung eines Stellzylinders (20) erfolgen.

Fig. 1 zeigt den Kran (3) in einer Grundpositionierung, während eines Schwimmtransportes der Container (1). Ein Seil (22) des Kranes (3) ist in dieser Positionierung im Wesentlichen aufgewickelt. Das Seil (22) ist am Ende des Auslegers (18) über eine Auslegerrolle (23) geführt. Eine Seilwinde (24) wird vorzugsweise innerhalb des Krankopfes (17) angeordnet.

Zur Unterstützung einer sicheren Stauung der Container (1) auch bei einwirkenden Seiten- oder Querkräften werden die Stellplätze für die Container (1) mit Zellgerüsten (31) versehen.

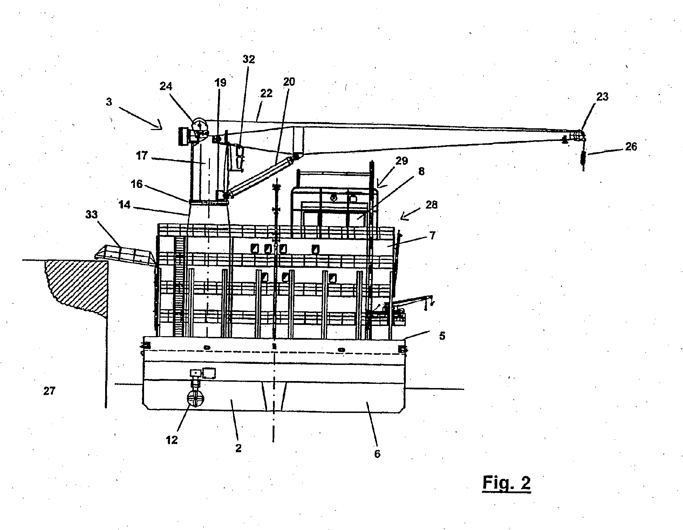

Fig. 2 zeigt den Ponton (2) gemäß Fig. 1 in einer Frontansicht und den Kran (3) in einer Arbeitspositionierung, in der sein Ausleger (18) über das Deckshaus (28) verschwenkt ist. Es ist zu erkennen, daß der Kran (3) relativ zu einer Längsachse des Pontons (2) seitlich versetzt angeordnet ist. Aus Fig. 1 war bereits zu erkennen, daß der Kran (3) relativ zu einem vorgesehenen Arbeitsbereich in Richtung der Längsachse etwa in einem mittleren Bereich angeordnet ist. Aus Fig. 2 ist ebenfalls zu erkennen, daß die beiden Ruderpropeller (11, 12) relativ zur Längsachse versetzt angeordnet sind. Insbesondere ist dabei daran gedacht, jeweils einen gleichen Abstand zur Längsachse zu realisieren und die beiden Ruderpropeller (11, 12) auf entgegengesetzten Seiten der Längsachse zu positionieren.

Im Betriebszustand gemäß Fig. 2 nimmt der Kran (3) mit einem am Haken (26) angeschlagenem Lastaufnahmemittel Container vom Kai (27) hoch und setzt diese nach einer entsprechenden Verschwenkung im Bereich des Pontons (2) ab. Bei einem Entladevorgang wird der Arbeitszyklus in einer umgekehrten Reihenfolge durchgeführt. Die relativ zur Längsachse versetzte Anordnung des Krans (3) weist den vorteil auf, daß entweder eine maximale landseitige Auslage oder ein beschleunigtes Arbeiten des Kranes erreicht werden kann. Durch die an beiden Enden des Pontons angeordneten Ruderpropeller (11, 12) ist es möglich, den Ponton (2) sowohl auf der Stelle manövrieren zu können als auch parallel zum Kai (27) traversieren zu können. Durch die relativ zur Längsachse asymmetrisch angeordneten Propeller (11, 12) wird eine gute Kursstabilität und ein hoher Wirkungsgrad der Propeller erreicht.

Aus Fig. 2 ist ebenfalls erkennbar, daß das Ruderhaus (29) mit Steuerstand (8) und die Besatzungsunterkünfte (7) im Bereich eines Deckshauses (28) angeordnet sind. Vom Steuerstand (8) aus wird der Antrieb des Pontons (2) gesteuert. Der Kran (3) wird von der Krankanzel (32) aus gesteuert.

Ein Zugang zum Ponton (2) bei unterschiedlichen Beladezuständen sowie unterschiedlichen Höhen der Kaimauer kann durch eine höhenverstellbare Gangway (33) unterstützt werden.

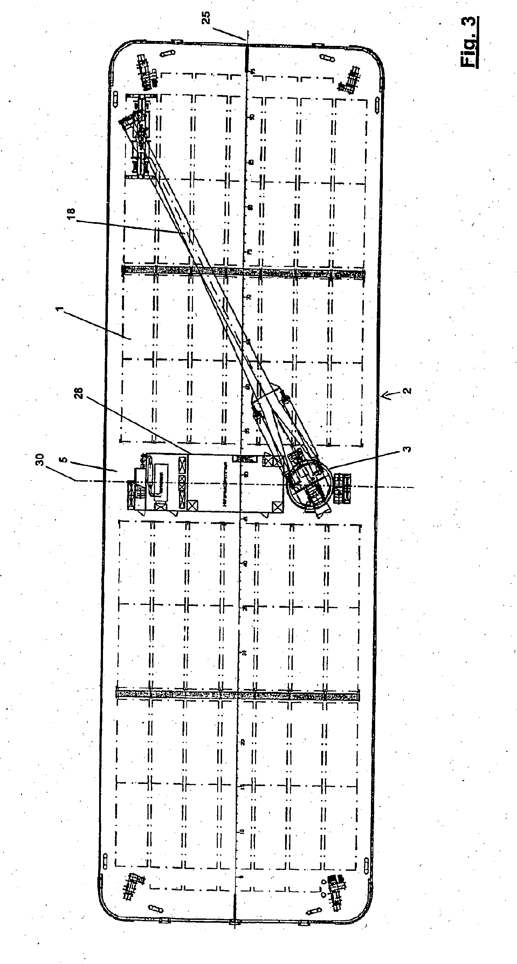

Fig. 3 veranschaulicht in einer Draufsicht auf das Deck (5) die relativ zur Längsachse (25) seitlich versetzte Anordnung des Kranes (3) sowie die Anordnung des Deckshauses (28) benachbart zum Kran (3). Insbesondere ist zu erkennen, daß beim dargestellten Ausführungsbeispiel sowohl der Kran (3) als auch das Deckshaus (28) auf einer quer zur Längsachse (25) verlaufenden Querachse (30) angeordnet sind. Das Deckshaus (28) befindet sich hierdurch seitlich neben dem Kran (3). Ebenfalls ist zu erkennen, daß das Ponton (2) eine im wesentlichen symmetrische Ausbildung relativ zur Querachse (30) aufweist. Hierdurch kann eine optimale Ausnutzung der Stellfläche im Bereich des Decks (5) sowie eine optimale Nutzung des Krans (3) unterstützt werden.

Eine hohe Manövrierfähigkeit des Ponton (2) kann dadurch erreicht werden, daß im Bereich eines Schiffsendes (6) symmetrisch zur Längsachse (25) zwei Ruderpropeller (12) angeordnet werden. Ebenfalls trägt es zu einer hohen Manövrierfähigkeit bei, im Bereich des anderen Schiffsendes (13) zwei spiegelsymmetrisch zur Längsachse (25) angeordnete Ruderpropeller (11) anzuordnen.

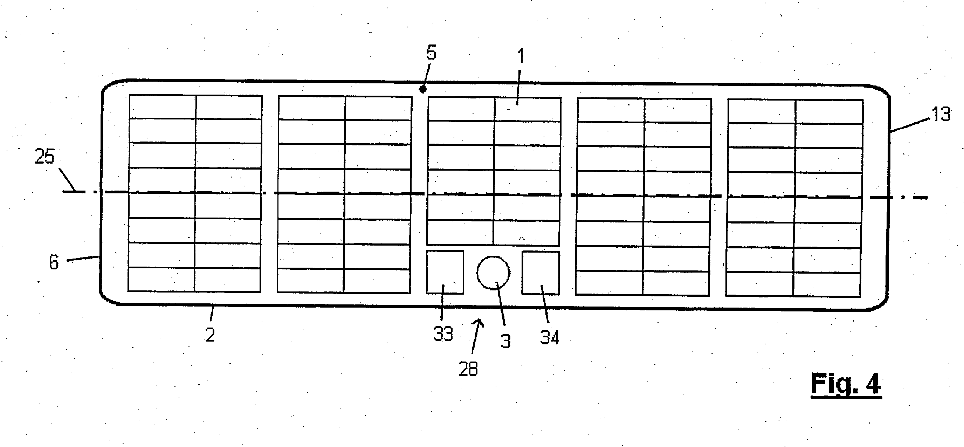

Fig. 4 zeigt eine Ausführungsform, bei der auf dem die Container (1) transportierenden Ponton (2) ein aus zwei Haussegmenten (33, 34) bestehendes Deckshaus (28) angeordnet ist. Die Haussegmente (33, 34) sind jeweils auf einander gegenüberliegenden Seiten neben dem Kran (3) positioniert, vorzugsweise relativ zum Kran (3) mit einem jeweils gleichen Abstand. Die relativ zum Kran (3) seitliche Anordnung der Haussegmente (33, 34) erfolgt beim dargestellten Ausführungsbeispiel derart, daß das Haussegment (33) dem einen Schiffsende (6) und das Haussegment (34) dem gegenüberliegenden Schiffsende (13) zugewandt angeordnet ist. Durch diese Anordnung der Haussegmente (33, 34) wird seitlich neben dem Kran (3) quer zur Längsachse (25) ein zusätzlicher Stauraum für Container (2) auf dem Deck (5) bereitgestellt.

Bedarfsabhängig können die Haussegmente (33, 34) über begehbare offene oder geschlossene Brücken miteinander verbunden sein.

## Patentansprüche

1. Schwimmende, selbst fahrende Vorrichtung zum Transport und Umschlag von Containern (1), die als ein schwimmfähiges Objekt ausgebildet ist, ein Deckshaus mit Ruderhaus (29) aufweist und mit mindestens einem Kran (3) versehen ist, der mindestens ein Vertikalelement (14) sowie einen Ausleger (18) aufweist, sowie bei der der Kran (3) im Bereich einer quer zu einer Längsachse des Objektes verlaufenden Querachse (30) angeordnet ist, sowie bei der der Kran (3) seitlich versetzt zur Längsachse (25) angeordnet ist, **dadurch gekennzeichnet, dass** der Kran (3) einen Drehkranz (16) aufweist, dass das Deckshaus (28) mit Ruderhaus (29) benachbart zum Kran positioniert ist und dass sowohl der Kran (3) als auch das Deckshaus (28) in Richtung der Längsachse etwa in der Mitte eines vorgegebenen Arbeitsbereiches angeordnet sind, wobei der Kran (3) seitlich neben dem Deckshaus (28) positioniert ist und dass der Kranausleger (18) über das Deckshaus (28) verschwenkbar ist, sowie dass die schwimmende selbstfahrende Vorrichtung (2) im wesentlichen spiegelsymmetrisch zur Querachse (30) ausgebildet ist.

2. Vorrichtung nach Anspruch 1, **dadurch gekennzeichnet, daß** das schwimmfähiges Objekt als ein Ponton (2) ausgebildet ist.

3. Vorrichtung nach Anspruch 2, **dadurch gekennzeichnet, daß** mindestens eines der Vertikalelemente (14) starr mit einer Struktur (4) des Pontons (2) verbunden ist.

4. Vorrichtung nach einem der Ansprüche 2 oder 3, **dadurch gekennzeichnet, daß** im Bereich einer der Struktur (4) des Pontons (2) abgewandten Ausdehnung des Vertikalelementes (14) mit einem Abstand zu einem Deck (5) des Pontons (2) der Drehkranz (16) zur verschwenkbaren Lagerung eines den Ausleger (18) halternden Krankopfes (17) angeordnet ist.

5. Vorrichtung nach einem der Ansprüche 1 bis 4, **dadurch gekennzeichnet, daß** im Bereich mindestens einiger Stellplätze für die Container (1) Zellgerüste (31) angeordnet sind.

6. Vorrichtung nach einem der Ansprüche 2 bis 5, **dadurch gekennzeichnet, daß** der Ponton (2) mit mindestens einem Antriebsaggregat (10) versehen ist.

7. Vorrichtung nach einem der Ansprüche 2 bis 6, **dadurch gekennzeichnet, daß** der Ponton (2) einen Steuerstand (8) aufweist, der in lotrechter Richtung auf einer Höhe oberhalb einer maximalen Beladungsebene angeordnet ist.

8. Vorrichtung nach einem der Ansprüche 2 bis 7, **dadurch gekennzeichnet, daß** der Ponton (2) mit mindestens einer Besatzungsunterkunft (7) versehen ist.

9. Vorrichtung nach einem der Ansprüche 6 bis 8, **dadurch gekennzeichnet, daß** das Antriebsaggregat/die Antriebsaggregate (10) mit zwei Ruderpropellern (11, 12) gekoppelt ist/sind.

10. Vorrichtung nach Anspruch 9, **dadurch gekennzeichnet, daß** jeweils ein Ruderpropeller (11, 12) an beiden Enden (6, 13) des Pontons (2) angeordnet ist und daß die Ruderpropeller (11, 12) jeweils im Wesentlichen gleiche Abstände zur Längsachse (25) aufweisen.

11. Vorrichtung nach einem der Ansprüche 9 bis 10, **dadurch gekennzeichnet, daß** die Ruderpropeller (11, 12) relativ zur Längsachse (25) asymmetrisch angeordnet sind.

12. Vorrichtung nach einem der Ansprüche 9 bis 11, **dadurch gekennzeichnet, daß** an beiden Schiffsenden (6, 13) jeweils zwei Ruderpropeller (11, 12) angeordnet sind.

13. Vorrichtung nach einem der Ansprüche 2 bis 12, **dadurch gekennzeichnet, daß** die Struktur (4) des Pontons (2) mindestens im Bereich einer Befestigung des Krans (2) an der Struktur (4) eine Strukturverstärkung aufweist.

14. Vorrichtung nach einem der Ansprüche 2 bis 13, **dadurch gekennzeichnet, daß** der Ponton (2) eine im Wesentlichen quaderförmige Gestaltung aufweist.

15. Vorrichtung nach einem der Ansprüche 1 bis 14, **dadurch gekennzeichnet, daß** der Kran (3) eine Dauerbelastungen widerstehende Konstruktion aufweist.

16. Vorrichtung nach einem der Ansprüche 2 bis 15 **dadurch gekennzeichnet, daß** das Ponton (2) mit einer höhenverstellbaren Gangway (33) versehen ist.

17. Vorrichtung nach einem der Ansprüche 1 bis 16, **dadurch gekennzeichnet, daß** das Deckshaus (28) aus zwei Haussegmenten (33, 34) ausgebildet ist, die auf einander gegenüberliegenden Seiten jeweils neben dem Kran (3) angeordnet sind.

18. Vorrichtung nach Anspruch 17, **dadurch gekennzeichnet, daß** quer zur Längsachse (25) neben dem Kran und neben den Haussegmenten (33, 34) Containerstellplätze angeordnet sind.

19. Vorrichtung nach einem der Ansprüche 17 bis 18, **dadurch gekennzeichnet, daß** die Haussegmente (33, 34) mindestens eine begehbare Verbindung zueinander aufweisen.

## Claims

1. Floating, self-propelled device for transporting and transferring containers (1), which is constructed as a floatable object, has a deckhouse with a wheelhouse (29) and is provided with at least one crane (3) which has at least one vertical element (14) as well as a boom (18), and also in which device the crane (3) is arranged in the region of a transverse axis (30) which extends transversely to a longitudinal axis of the object, and also in which device the crane (3) is arranged in a manner laterally offset in relation to the longitudinal axis (25), **characterised in that** the crane (3) has a turntable (16), that the deckhouse (28) with the wheelhouse (29) is positioned in a manner adjacent to the crane, and that both the crane (3) and the deckhouse (28) are arranged, in the direction of the longitudinal axis, approximately in the middle of a predetermined working area, said crane (3) being positioned laterally next to the deckhouse (28), and that the crane boom (18) can be swivelled over the deckhouse (28), and also that the floating, self-propelled device (2) is constructed substantially in a mirror-inverted manner in relation to the transverse axis (30).

2. Device according to Claim 1, **characterised in that** the floatable object is constructed as a pontoon (2).

3. Device according to Claim 2, **characterised in that** at least one of the vertical elements (14) is rigidly connected to a structure (4) belonging to the pontoon (2).

4. Device according to either of Claims 2 or 3, **characterised in that** the turntable (16) for the swivellable mounting of a crane head (17) that supports the boom (18) is arranged, at a distance from a deck (5) of the pontoon (2), in the region of an extension of the vertical element (14) that faces away from the structure (4) of said pontoon (2).

5. Device according to one of Claims 1 to 4, **characterised in that** cell guides (31) are arranged in the region of at least some parking spaces for the containers (1).

6. Device according to one of Claims 2 to 5, **characterised in that** the pontoon (2) is provided with at least one driving unit (10).

7. Device according to one of Claims 2 to 6, **characterised in that** the pontoon (2) has a control station (8) which is arranged, in the vertical direction, at a height above a maximum loading plane.

8. Device according to one of Claims 2 to 7, **characterised in that** the pontoon (2) is provided with at least one billet (7) for the crew.

9. Device according to one of Claims 6 to 8, **characterised in that** the drive unit/units (10) is/are coupled to two rudder propellers (11, 12).

10. Device according to Claim 9, **characterised in that** one rudder propeller (11, 12) in each case is arranged at the two ends (6, 13) of the pontoon (2), and that said rudder propellers (11, 12) are each at substantially equal distances in relation to the longitudinal axis (25).

11. Device according to either of Claims 9 or 10, **characterised in that** the rudder propellers (11, 12) are arranged asymmetrically relative to the longitudinal axis (25).

12. Device according to one of Claims 9 to 11, **characterised in that** two rudder propellers (11, 12) in each case are arranged at the two ends (6, 13) of the ship.

13. Device according to one of Claims 2 to 12, **characterised in that** the structure (4) of the pontoon (2) has a structural reinforcement, at least in the region of a fastening of the crane (3) to said structure (4).

14. Device according to one of Claims 2 to 13, **characterised in that** the pontoon (2) has a substantially parallelepipedal configuration.

15. Device according to one of Claims 1 to 14, **characterised in that** the crane (3) is of a design that withstands constant loads.

16. Device according to one of Claims 2 to 15, **characterised in that** the pontoon (2) is provided with a vertically adjustable gangway (33).

17. Device according to one of Claims 1 to 16, **characterised in that** the deckhouse (28) is constructed from two house segments (33, 34) which are arranged next to the crane (3) in each case, on opposite sides from one another.

18. Device according to Claim 17, **characterised in that** container parking spaces are arranged, transversely to the longitudinal axis (25), next to the crane and next to the house segments (33, 34).

19. Device according to either of Claims 17 or 18, **characterised in that** the house segments (33, 34) have at least one connection to one another that can be walked on.

## Revendications

1. Installation autotractée, flottante, pour le transport et le transbordement de conteneurs (1), laquelle installation est réalisée sous la forme d'un objet pouvant flotter, est dotée d'un rouf avec timonerie (29) et est équipée d'au moins une grue (3) qui est dotée d'au moins un élément vertical (14) ainsi que d'une flèche (18), et dans laquelle ladite grue (3) est disposée dans la région d'un axe transversal (30) qui s'étend perpendiculairement par rapport à un axe longitudinal de l'objet, ainsi que dans laquelle la grue (3) est décalée latéralement par rapport à l'axe longitudinal (25), **caractérisée en ce que** la grue (3) est dotée d'une couronne d'orientation (16), que le rouf (28) est positionné, avec la timonerie (29), à proximité de la grue (3) et que la grue (3) tout comme le rouf (28) sont disposés dans la direction de l'axe longitudinal, à peu près au milieu d'une zone de travail prédéterminée, sachant que la grue (3) est positionnée latéralement, à côté du rouf (28) et que la flèche (18) peut être pivotée au-dessus du rouf (28), et que l'installation autotractée, flottante (2) est réalisée sensiblement à symétrie spéculaire par rapport à l'axe transversal (30).

2. Installation selon la revendication 1, **caractérisée en ce que** l'objet pouvant flotter est réalisé sous la forme d'un ponton (2).

3. Installation selon la revendication 2, **caractérisée en ce que** l'un des éléments verticaux (14) au moins est relié rigidement à une structure (4) du ponton (2).

4. Installation selon l'une des revendications 2 ou 3, **caractérisée en ce que** la couronne d'orientation (16) pour le montage à pivotement d'une tête de grue (17) portant la flèche (18) est disposée dans la région d'une étendue de l'élément vertical (14) opposée à la structure (4) du ponton (2), à un intervalle d'un pont (5) du ponton (2).

5. Installation selon l'une des revendications 1 à 4, **caractérisée en ce que** des charpentes (31) sont disposées dans la région d'au moins quelques-uns des lieux d'emplacement des conteneurs (1).

6. Installation selon l'une des revendications 2 à 5, **caractérisée en ce que** le ponton (2) est doté d'au moins une unité d'entraînement (10).

7. Installation selon l'une des revendications 2 à 6, **caractérisée en ce que** le ponton (2) est doté d'une passerelle de commande (8) qui est disposée dans la direction perpendiculaire, à une hauteur supérieure à un plan de chargement maximum.

8. Installation selon l'une des revendications 2 à 7, **caractérisée en ce que** le ponton (2) est pourvu d'au moins un abri (7) pour les membres de l'équipage.

9. Installation selon l'une des revendications 6 à 8, **caractérisée en ce que** l'unité d'entraînement / les unités d'entraînement (10) est couplée / sont couplées avec deux hélices de gouvernail (11, 12).

10. Installation selon la revendication 9, **caractérisée en ce qu'**une hélice de gouvernail (11, 12) est respectivement disposée à chacune des deux extrémités (6, 13) du ponton (2) et que les hélices de gouvernail (11, 12) présentent chacune des intervalles sensiblement égaux par rapport à l'axe longitudinal (25).

11. Installation selon l'une des revendications 9 à 10, **caractérisée en ce que** les hélices de gouvernail (11, 12) sont disposées asymétriquement par rapport à l'axe longitudinal (25).

12. Installation selon l'une des revendications 9 à 11, **caractérisée en ce que** deux hélices de gouvernail (11, 12) sont disposées à chacune des deux extrémités (6, 13) du bateau.

13. Installation selon l'une des revendications 2 à 12, **caractérisée en ce que** la structure (4) du ponton (2) est dotée d'un renforcement au moins dans la région d'une fixation de la grue (3) à la structure (4).

14. Installation selon l'une des revendications 2 à 13, **caractérisée en ce que** le ponton (2) est doté d'une forme sensiblement parallélépipédique.

15. Installation selon l'une des revendications 1 à 14, **caractérisée en ce que** la grue (3) est dotée d'une construction résistante aux charges permanentes.

16. Installation selon l'une des revendications 2 à 15, **caractérisée en ce que** le ponton (2) est pourvu d'une passerelle (33) dont la hauteur peut être régulée.

17. Installation selon l'une des revendications 1 à 16, **caractérisée en ce que** le rouf (28) est composé de deux segments de rouf (33, 34) qui sont disposés chacun à côté de la grue (3), sur des côtés respectivement situés à l'oppose l'un de l'autre.

18. Installation selon la revendication 17, **caractérisée en ce que** des lieux d'emplacement de conteneurs sont aménagés transversalement par rapport à l'axe longitudinal (25), à côte de la grue et à côté des segments (33, 34) du rouf.

19. Installation selon l'une des revendications 17 à 18, **caractérisée en ce que** les segments (33, 34) du rouf sont dotés d'au moins une liaison praticable qui les réunit.
